(19) Europäisches Patentamt
European Patent Office
Office européen des brevets

(11) **EP 4 097 844 B1**

(12) **EUROPÄISCHE PATENTSCHRIFT**

(45) Veröffentlichungstag und Bekanntmachung des Hinweises auf die Patenterteilung:
**02.10.2024 Patentblatt 2024/40**

(21) Anmeldenummer: **21710878.6**

(22) Anmeldetag: **01.02.2021**

(51) Internationale Patentklassifikation (IPC):
***H02S 50/15*** (2014.01)

(52) Gemeinsame Patentklassifikation (CPC):
**H02S 50/15;** Y02E 10/50

(86) Internationale Anmeldenummer:
**PCT/DE2021/100091**

(87) Internationale Veröffentlichungsnummer:
**WO 2021/151438 (05.08.2021 Gazette 2021/31)**

(54) **VERFAHREN ZUM ÜBERPRÜFEN EINES PHOTOVOLTAISCHEN ELEMENTS, SOWIE EIN PHOTOVOLTAISCHES ELEMENT, ÜBERPRÜFT NACH EINEM SOLCHEN VERFAHREN**

METHOD FOR INSPECTING A PHOTOVOLTAIC ELEMENT, AND PHOTOVOLTAIC ELEMENT WHICH IS INSPECTED USING SUCH A METHOD

PROCÉDÉ D'INSPECTION D'UN ÉLÉMENT PHOTOVOLTAÏQUE ET ÉLÉMENT PHOTOVOLTAÏQUE INSPECTÉ À L'AIDE D'UN TEL PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2020 DE 102020102494**

(43) Veröffentlichungstag der Anmeldung:
**07.12.2022 Patentblatt 2022/49**

(73) Patentinhaber: **Heliatek GmbH**
**01139 Dresden (DE)**

(72) Erfinder: **WILDE, Christian**
**01139 Dresden (DE)**

(56) Entgegenhaltungen:
**WO-A1-2018/079657      CN-A- 107 483 014**

**Beschreibung**

Die Erfindung betrifft ein Verfahren zum Überprüfen eines photovoltaischen Elements, sowie ein photovoltaisches Element, überprüft nach einem solchen Verfahren, insbesondere zum Überprüfen der Fertigungsqualität und/oder zum Bestimmen von optischen und/oder elektrischen Eigenschaften von photovoltaischen Elementen. Das Dokument WO 2018/079657 A1 beschreibt ein Verfahren für photovoltaische Elements.

Zur elektrischen Charakterisierung müssen Solarzellen homogen und vollflächig mit sonnenähnlicher Beleuchtung (Standard Testing Conditions - STC) beleuchtet werden und an entsprechenden Kontakten die auftretenden Ströme und Spannungen gemessen werden. Sonnensimulatoren, sogenannte Flasher, simulieren dabei eine spektrale Breite und eine spektrale Intensitätsverteilung, die weitgehend dem Sonnenlicht entsprechen. Für das Beleuchten verwendete Sonnensimulatoren sind instrumentell sehr aufwändig und nicht beliebig längenskalierbar. Übliche Sonnensimulatoren beleuchten Flächen von bis zu 3 m$^2$. Die Beleuchtungsfläche von Sonnensimulatoren zur Leistungsbestimmung von Solarzellen ist endlich, insbesondere bei besonderes großen und langen Solarzellen kann die Fläche der Solarzellen nicht auf einmal mit dem Sonnensimulator beleuchtet werden. Messungen an natürlichem Sonnenlicht sind stark fehlerbehaftet und praktisch kaum mit angemessenem Durchsatz realisierbar.

Die in einschlägigen Normen, beispielsweise IEC 60904, geforderte homogene Ausleuchtung von Solarzellen während einer Überprüfung, lässt sich für Solarzellen mit beliebigen Längen und/oder Breiten technisch nicht realisieren. Für Solarzellen mit einer Länge und/oder Breite, die größer als bei einer Bestrahlungsfläche eines Sinnensimulators sind, ist die Überprüfung nicht umsetzbar.

EP 1 647 827 A1 offenbart ein Testsystem zum Überprüfen der Fertigungsqualität von Solarzellen mit einer im Testbereich angeordneten optischen Prüfeinrichtung zur Sichtprüfung der Solarzellen und einer elektrischen Prüfeinrichtung zur Prüfung der elektrischen Funktionen der Solarzellen mit einer Beleuchtungseinrichtung zur Bestrahlung der Solarzellen sowie einer elektrischen Kontaktiereinrichtung zum Abgreifen von Spannungen an den Kontakten der Solarzellen.

DE 11 2011 100 041 T5 offenbart eine Solarzellen-Inspektionsvorrichtung mit einem Sonnensimulator, einem Lichtmengen-Steuerabschnitt, der mit dem Sonnensimulator verbunden ist, um eine von der Anordnung von Lichtemittern des Sonnensimulators emittierte Lichtmenge zu steuern, und einem elektrischen Messabschnitt, der mit einer Solarzelle elektrisch verbunden ist, die eine Lichtempfangsfläche aufweist, die auf zumindest einem Teil der wirksam bestrahlten Region des Sonnensimulators angeordnet ist, um eine fotoelektrische Umwandlungseigenschaft der Solarzelle zu messen, während eine elektrische Last auf die Solarzelle ausgeübt wird.

Aus dem Stand der Technik bekannte Verfahren zum Überprüfen von Solarzellen ermöglichen nicht eine Überprüfung von beliebig großen Solarzellen, insbesondere da diese Verfahren von der Größe einer von einem Sonnensimulator bestrahlten Fläche abhängig sind.

Der Erfindung liegt daher die Aufgabe zugrunde, ein Verfahren zum Messen und Überprüfen eines photovoltaischen Elements von einer größeren, insbesondere längeren und/oder breiteren, Ausdehnung im Vergleich zu einer beleuchteten Fläche eines Sonnensimulators bereitzustellen, wobei die genannten Nachteile nicht auftreten, und wobei insbesondere eine Gesamtkennlinie und/oder ein Gesamtphotostrom für das gesamte photovoltaische Element mit einer größeren Fläche als die mittels eines Sonnensimulators beleuchteten Fläche ermittelt wird.

Die Aufgabe wird durch die Gegenstände der unabhängigen Ansprüche gelöst. Vorteilhafte Ausgestaltungen ergeben sich aus den Unteransprüchen.

Die Aufgabe wird gelöst, indem ein Verfahren zum Überprüfen eines photovoltaischen Elements, bevorzugt zur Leistungsbestimmung und/oder zur Bestimmung von Defekten des photovoltaischen Elements, bereitgestellt wird. Das Verfahren umfasst die folgenden Schritte:

a) Bereitstellen eines photovoltaischen Elements,
b) Bereitstellen einer Dunkelkennlinie des photovoltaischen Elements bei einer bestimmten an das photovoltaische Element angelegten Spannung,
c) Unterteilen des photovoltaischen Elements in einzelne Segmente,
d) Messen von Kennlinien der einzelnen Segmente des photovoltaischen Elements in einer zeitlichen Abfolge, wobei die einzelnen Segmente mittels einer Beleuchtungseinrichtung bei der bestimmten an das photovoltaische Element angelegten Spannung beleuchtet werden, wobei das photovoltaische Element entlang einer Laufrichtung relativ zu der Beleuchtungseinrichtung und/oder die Beleuchtungseinrichtung entlang einer Laufrichtung relativ zu dem photovoltaischen Element bewegt wird, und
e) Ermitteln einer Gesamtkennlinie des photovoltaischen Elements in Abhängigkeit der Dunkelkennlinie und den gemessenen Kennlinien der einzelnen Segmente, so dass das photovoltaische Element überprüfbar ist.

Vorzugsweise wird ein Gesamtphotostrom für das gesamte photovoltaische Element erhalten, wobei sich der Gesamtphotostrom aus der Summe aller Photoströme der einzelnen Segmente ergibt.

Durch das erfindungsgemäße Verfahren wird die Überprüfung theoretisch beliebig langer und/oder breiter photovoltaischer Elemente insbesondere durch eine segmentweise Beleuchtung und die mathematische Zusammensetzung der Gesamtkennlinie ermöglicht. Das photovoltaische Element wird also nicht vollflächig ausgeleuchtet und vermessen, sondern eine Gesamtmessung wird aus vielen Einzelmessungen mit Beleuchtung einzelner Segmente zusammengesetzt. Eine Anforderung, beispielsweise in üblichen Normen, dass ein photovoltaisches Element während der Messung vollständig ausgeleuchtet werden muss, ist damit zwar nicht erfüllt, allerdings zeigt insbesondere das Unterteilen des photovoltaischen Elements in einzelne Segmente und das Messen dieser homogen beleuchteten einzelnen Segmente gemäß des erfindungsgemäßen Verfahrens keine oder zumindest nur eine sehr geringe Abweichung im Vergleich zur vollflächigen Beleuchtung des ganzen photovoltaischen Elements. Damit ermöglicht das erfindungsgemäße Verfahren eine Überprüfung von photovoltaischen Elementen mit einer nahezu beliebigen Länge und/oder Breite, und schafft damit auch einen Zugang zu deren Zertifizierung.

In einer bevorzugten Ausführungsform der Erfindung ist die bestimmte angelegte Spannung ein bestimmter Spannungsverlauf, wobei bevorzugt ein Strom des photovoltaischen Elements und/oder eines einzelnen Segments in Abhängigkeit von dem bestimmten Spannungsverlauf gemessen wird.

Unter einem Unterteilen des photovoltaischen Elements in einzelne Segmente wird insbesondere ein theoretisches einteilen des photovoltaischen Elements in einzelne Segmente verstanden.

Unter einem Messen von Kennlinien der einzelnen Segmente des photovoltaischen Elements in einer zeitlichen Abfolge wird insbesondere verstanden, dass die Kennlinien von zumindest zwei zueinander benachbarten Segmenten eines photovoltaischen Elements zeitlich unmittelbar aufeinanderfolgend gemessenen werden.

Unter einer Dunkelkennlinie wird insbesondere eine Kennlinie bei zumindest weitgehend abgedunkeltem photovoltaischen Element, bevorzugt bei vollständig abgedunkeltem photovoltaischen Element, verstanden.

Im Zusammenhang mit der Erfindung wird unter einer Kennlinie insbesondere die Abhängigkeit eines Photostroms $I_{Ph}(V)$ von der angelegten Spannung, also eine Photostrom-Spannungs-Kennlinie, eines photovoltaischen Elements oder eines Segments eines photovoltaischen Elements verstanden.

In einer bevorzugten Ausführungsform der Erfindung wird die Kennlinie eines Segments aus der Dunkelkennlinie und der Kennlinie des Segments unter Beleuchtung ermittelt. In einer bevorzugten Ausführungsform der Erfindung wird die Gesamtkennlinie des photovoltaischen Elements aus der Dunkelkennlinie und den Kennlinien der einzelnen Segmente unter Beleuchtung ermittelt.

In einer bevorzugten Ausführungsform der Erfindung wird der Photostrom eines Segments aus der Dunkelkennlinie und der Kennlinie des Segments unter Beleuchtung ermittelt. In einer bevorzugten Ausführungsform der Erfindung wird die Gesamtkennlinie aus den Photoströmen der einzelnen Segmente und aus der Dunkelkennlinie des photovoltaischen Elements ermittelt, bevorzugt wird der Gesamtphotostrom des photovoltaischen Elements aus der Summe der Photoströme der einzelnen Segmente ermittelt.

In einer bevorzugten Ausführungsform der Erfindung werden die Kennlinien der einzelnen Segmente des photovoltaischen Elements diskontinuierlich, insbesondere schrittweise, gemessen.

In einer alternativ bevorzugten Ausführungsform der Erfindung werden die Kennlinien der einzelnen Segmente des photovoltaischen Elements kontinuierlich gemessen.

In einer bevorzugten Ausführungsform der Erfindung findet das Unterteilen des photovoltaischen Elements in Schritt b) und das bewegen des photovoltaischen Elements entlang einer Laufrichtung relativ zu der Beleuchtungseinrichtung und/oder das Bewegen der Beleuchtungseinrichtung entlang einer Laufrichtung relativ zu dem photovoltaischen Element in Schritt c) zumindest teilweise gleichzeitig statt.

In einer bevorzugten Ausführungsform der Erfindung ist die Beleuchtungseinrichtung ein Sonnensimulator.

In einer bevorzugten Ausführungsform der Erfindung werden die einzelnen Segmente des photovoltaischen Elements mit der photoaktiven Fläche parallel zur Beleuchtungseinrichtung beleuchtet, insbesondere parallel zu einer Lichtquelle der Beleuchtungseinrichtung.

Unter einem photovoltaischen Element wird insbesondere eine Solarzelle verstanden, wobei das photovoltaische Element mindestens eine photovoltaische Zelle aufweist. Vorzugsweise weist das photovoltaische Element mehrere photovoltaische Zellen auf. Die photovoltaischen Zellen können auf unterschiedliche Weise in dem photovoltaischen Element angeordnet und/oder verschaltet sein.

In einer bevorzugten Ausführungsform der Erfindung weist das photovoltaische Element mindestens zwei photovoltaische Zellen auf, wobei die mindestens zwei photovoltaischen Zellen in Richtung aufeinander folgender Segmente durchgängig sind, insbesondere durchgängig elektrisch leitend, oder in Richtung aufeinander folgender Segmente aus untereinander parallel verschalteten Zellen ausgebildet sind, und untereinander parallel und/oder in Reihe geschaltet sind. Vorzugsweise sind die photovoltaischen Zellen über die gesamte Länge des photovoltaischen Elements ausgebildet und/oder die photovoltaischen Zellen über die gesamte Länge des photovoltaischen Elements zueinander parallel verschaltet.

In einer bevorzugten Ausführungsform der Erfindung wird das photovoltaische Element derart in Segmente unterteilt, dass alle in Reihe geschalteten photovoltaischen Zellen in jedem einzelnen Segment die gleiche Fläche aufweisen.

In einer bevorzugten Ausführungsform der Erfindung ist das photovoltaisches Element ein organisches photovoltaisches Element, wobei bevorzugt mindestens eine photoaktive Schicht des organischen photovoltaischen Elements kleine Moleküle als Absorbermaterial aufweist.

In einer bevorzugten Ausführungsform der Erfindung ist das photovoltaische Element ein flexibles photovoltaisches Element, insbesondere ein flexibles organisches photovoltaisches Element.

In einer bevorzugten Ausführungsform der Erfindung weist das photovoltaische Element mindestens eine photovoltaische Zelle mit mindestens einer photoaktiven Schicht auf, insbesondere eine CIS-, CIGS-, GaAs-, oder Si-Zelle, eine Perovskit-Zelle oder ein organisches photovoltaisches Element (OPV). Unter einem organischen photovoltaische Element wird insbesondere ein photovoltaisches Element mit mindestens einer organischen photoaktiven Schicht verstanden, insbesondere ein polymeres organisches photovoltaisches Element oder ein organisches photovoltaisches Element auf Basis kleiner Moleküle. Während Polymere sich dadurch auszeichnen, dass diese nicht verdampfbar und daher nur aus Lösungen aufgebracht werden können, sind kleine Moleküle meist verdampfbar und können entweder wie Polymere als Lösung aufgebracht werden, aber auch mittels Verdampfungstechnik, insbesondere durch Verdampfen aus dem Vakuum. Unter kleinen Molekülen werden insbesondere nicht-polymere organische Moleküle mit monodispersen molaren Massen zwischen 100 und 2000 g/mol verstanden, die unter Normaldruck (Luftdruck der uns umgebenden Atmosphäre) und bei Raumtemperatur in fester Phase vorliegen. Insbesondere sind die kleinen Moleküle photoaktiv, wobei unter photoaktiv verstanden wird, dass die Moleküle unter Lichteintrag ihren Ladungszustand und/oder ihren Polarisierungszustand ändern.

In einer bevorzugten Ausführungsform der Erfindung umfasst die photoaktive Schicht des Schichtsystems kleine Moleküle, welche im Vakuum verdampfbar sind. In einer bevorzugten Ausführungsform der Erfindung ist zumindest die photoaktive Schicht des Schichtsystems im Vakuum aufgedampft.

Ein möglicher Aufbau des Schichtsystems eines optoelektronischen Bauelements ist in WO2004083958A2 und WO2011161108A1 beschrieben. Hier werden vorzugsweise Schichtsysteme verwendet, bei denen die photoaktiven Schichten Absorbermaterialien umfassen, die verdampfbar sind und durch Verdampfung (PVD, engl. physical vapor deposition) aufgebracht werden bzw. aufgebracht sind. Dafür werden Materialien die zur Gruppe der kleinen Moleküle gehören, verwendet, die unter anderem in WO2006092134A1 und WO2014206860A1 beschrieben sind. Die photoaktiven Schichten bilden Akzeptor-Donor-Systeme, und können aus mehreren Einzelschichten, oder aus Mischschichten, als planarheterojunction, und bevorzugt als bulk-heterojunction. Bevorzugt sind Schichtsysteme, die komplett durch Verdampfung aufgetragen werden können.

Das erfindungsgemäße Verfahren zum Überprüfen eines photovoltaischen Elements weist Vorteile im Vergleich zum Stand der Technik auf. Vorteilhafterweise können photovoltaische Elemente einer nahezu beliebigen Länge und/oder Breite mittels einer Beleuchtungseinrichtung überprüft werden. Vorteilhafterweise ist das Verfahren einfach anzuwenden und kostengünstig. Vorteilhafterweise werden weitgehend beliebig große Flächen eines photovoltaischen Elements überprüfbar. Vorteilhafterweise wird eine Messung von langen photovoltaischen Elementen, insbesondere auch mit einer Länge und/oder Breite von mehr als 2 m, gemäß üblicher Normen, beispielsweise IEC 60904-1:2006, ermöglicht.

Gemäß einer Weiterbildung der Erfindung ist vorgesehen, dass die einzelnen Segmente über deren vollständige Fläche, bevorzugt über deren vollständige photoaktive Fläche, beleuchtet werden, und/oder jeweils die einzelnen Segmente des photovoltaischen Elements und/oder die einzelnen Segmente untereinander zumindest weitgehend homogen beleuchtet werden.

Unter einer homogenen Beleuchtung wird insbesondere ein möglichst gleichmäßiges Ausleuchten eines Segments, insbesondere einer Fläche des Segments, verstanden, bevorzugt über die gesamte Fläche des Segments.

Gemäß einer Weiterbildung der Erfindung ist vorgesehen, dass die Gesamtkennlinie des photovoltaischen Elements in Schritt e) durch Aufsummieren von aus der Dunkelkennlinie des photovoltaischen Elements und aus den gemessenen Kennlinien der einzelnen Segmente ermittelten Photoströme ermittelt wird.

Unter einem Aufsummieren von Kennlinien wird insbesondere auch ein Zusammensetzen von Kennlinien verstanden. Beim Aufsummieren wird insbesondere zusätzlich ein ermittelter Photostrom mindestens einer weiteren Kennlinie bei einem Umgebungslicht von einem ermittelten Photostrom einer Kennlinie unter Beleuchtung abgezogen.

Gemäß einer Weiterbildung der Erfindung ist vorgesehen, dass ein Segment des photovoltaischen Elements in Laufrichtung mit einem vorhergehenden Segment und/oder mit einem folgenden Segment zumindest weitgehend keine Überlappung und zumindest weitgehend keine Lücke aufweist. Dadurch kann gewährleistet werden, dass keine Fläche, insbesondere keine photoaktive Fläche, des photovoltaischen Elements doppelt gemessen wird und/oder ein Teil der Fläche des photovoltaischen Elements nicht gemessen wird.

Gemäß einer Weiterbildung der Erfindung ist vorgesehen, dass das photovoltaische Element, bevorzugt eine photoaktive Fläche des photovoltaischen Elements, vollständig von den einzelnen Segmenten erfasst wird.

Gemäß einer Weiterbildung der Erfindung ist vorgesehen, dass die Dunkelkennlinie des photovoltaischen Elements in Schritt b) vor oder nach Schritt d) des Verfahrens bereitgestellt wird, bevorzugt gemessen wird, und/oder die Schritte c) und d) gemeinsam durchgeführt werden. In einer bevorzugten Ausführungsform der Erfindung wird die Dunkelkennlinie des photovoltaischen Elements gemessen. In einer alternativ bevorzugten Ausführungsform der Erfindung ist die Dunkelkennlinie des photovoltaischen Elements bereits bekannt.

Gemäß einer Weiterbildung der Erfindung ist vorgesehen, dass die Dunkelkennlinie des photovoltaischen Elements in Schritt b) eine Dunkelkennlinie bei vollständiger oder weitgehend vollständiger Dunkelheit ist.

Gemäß einer Weiterbildung der Erfindung ist vorgesehen, dass bei einem vorhandenen Umgebungslicht mindestens eine weitere Kennlinie bei der bestimmten an das photovoltaische Element angelegten Spannung und dem Umgebungslicht gemessen wird, wobei die einzelnen Segmente und/oder das photovoltaische Element nicht mittels der Beleuchtungseinrichtung beleuchtet werden, und wobei die Gesamtkennlinie des photovoltaischen Elements in Schritt e) zusätzlich in Abhängigkeit der mindestens einen weiteren Kennlinie bei dem Umgebungslicht ermittelt wird, und/oder die Gesamtkennlinie des photovoltaischen Elements in Schritt e) durch zusätzliches Abziehen der von aus den weiteren gemessenen Kennlinien der einzelnen Segmente bei dem Umgebungslicht ermittelten Photoströme des Umgebungslichts ermittelt wird.

Unter einem Umgebungslicht wird insbesondere ein bei dem Messen einer Dunkelkennlinie des photovoltaischen Elements und/oder einzelner Segmente des photovoltaischen Elements, und/oder bei dem Messen der Kennlinie des photovoltaischen Elements und/oder einzelner Segmente des photovoltaischen Elements unter Beleuchtung mittels der Beleuchtungseinrichtung vorhandenes Licht der Umgebung, insbesondere bei nicht vollständiger Dunkelheit der Umgebung, verstanden. Das Umgebungslicht führt dabei zu einem zusätzlichen Photostrom des photovoltaischen Elements und/oder der einzelnen Segmente des photovoltaischen Elements, und beeinflusst dadurch die Ermittlung des Gesamtphotostroms. Die Intensität des Umgebungslichts ist insbesondere wesentlich geringer im Vergleich zu der Intensität der Beleuchtung mittels der Beleuchtungseinrichtung, bevorzugt beträgt die Intensität des Umgebungslichts höchstens 10%, bevorzugt höchstens 8%, bevorzugt höchstens 5%, oder bevorzugt höchstens 2% der Intensität der Beleuchtung mittels der Beleuchtungseinrichtung.

Gemäß einer Weiterbildung der Erfindung ist vorgesehen, dass eine Länge der Segmente in Laufrichtung 10 cm bis 10 m beträgt, bevorzugt 10 cm bis 2 m, und/oder das photovoltaische Element in Abhängigkeit einer mittels der Beleuchtungseinrichtung beleuchteten Fläche in einzelne Segmente unterteilt wird.

In einer bevorzugten Ausführungsform der Erfindung beträgt die Länge der einzelnen Segmente in Laufrichtung 10 cm bis 10 m, bevorzugt 10 cm bis 5 m, bevorzugt 10 cm bis 2 m, bevorzugt 10 cm bis 1 m, bevorzugt 20 cm bis 10 m, bevorzugt 20 cm bis 5 m, bevorzugt 20 cm bis 2 m, oder bevorzugt 20 cm bis 1 m, oder mindestens 10 cm, bevorzugt mindestens 20 cm, bevorzugt mindestens 60 cm, bevorzugt mindestens 1 m, oder bevorzugt mindestens 2 m. In einer besonders bevorzugten Ausführungsform der Erfindung beträgt die Länge der einzelnen Segmente mindestens 1/20 der Länge der photoaktiven Fläche des photovoltaischen Elements, bevorzugt mindestens 1/10, oder bevorzugt mindestens 1/8.

Unter einer Länge eines photovoltaischen Elements und/oder eines Segments eines photovoltaischen Elements wird alternativ insbesondere auch eine Breite eines Segments eines photovoltaischen Elements verstanden, wobei die Länge und/oder die Breite bevorzugt unabhängig von der Laufrichtung relativ zu der Beleuchtungseinrichtung ist.

Gemäß einer Weiterbildung der Erfindung ist vorgesehen, dass das Verfahren in einem Rolle-zu-Rolle Verfahren durchgeführt wird, und/oder das photovoltaische Element ein flexibles photovoltaisches Element ist, wobei während des Verfahrens bevorzugt ein erstes Ende und/oder ein zweites Ende des photovoltaischen Elements teilweise oder vollständig aufgewickelt vorliegt.

Die Aufgabe der vorliegenden Erfindung wird auch gelöst, indem ein photovoltaisches Element, überprüft nach einem erfindungsgemäßen Verfahren, bereitgestellt wird, insbesondere nach einem der zuvor beschriebenen Ausführungsbeispiele. Dabei ergeben sich für das photovoltaisches Element insbesondere die Vorteile, die bereits in Zusammenhang mit dem Verfahren zum Überprüfen eines photovoltaischen Elements beschrieben wurden.

Die Erfindung wird im Folgenden anhand der Zeichnungen näher erläutert. Dabei zeigen:

Fig. 1 eine schematische Darstellung eines Ausführungsbeispiels eines Verfahrens zum Überprüfen eines photovoltaischen Elements in einem Fließdiagramm;

Fig. 2 eine schematische Darstellung eines Ausführungsbeispiels mehrerer Anordnungen eines photovoltaischen Elements relativ zu einer Beleuchtungseinrichtung während eines Verfahrens zum Überprüfen eines photovoltaischen Elements in einer Draufsicht;

Fig. 3 eine schematische Darstellung eines Ausführungsbeispiels eines Unterteilens eines photovoltaischen Elements in einzelne Segmente in einer Draufsicht;

Fig. 4 eine schematische Darstellung eines Ausführungsbeispiels einer Vorrichtung zum Durchführen eines Verfahrens zum Überprüfen eines photovoltaischen Elements in einer Seitenansicht;

Fig. 5 in einem Ausführungsbeispiel eine nach einem erfindungsgemäßen Verfahren aus einer Dunkelkennlinie und Kennlinien einzelner Segmente ermittelte Gesamtkennlinie eines photovoltaischen Elements;

Fig. 6 in einem Ausführungsbeispiel einen Einfluss einer Positionierung einzelner Segmente bei einem Unterteilen eines photovoltaischen Elements in einem erfindungsgemäßen Verfahren; und

Fig. 7 in einem Ausführungsbeispiel einen Einfluss einer Länge der Segmente bei einem Unterteilen eines photovoltaischen Elements in einem erfindungsgemäßen Verfahren.

## Ausführungsbeispiele

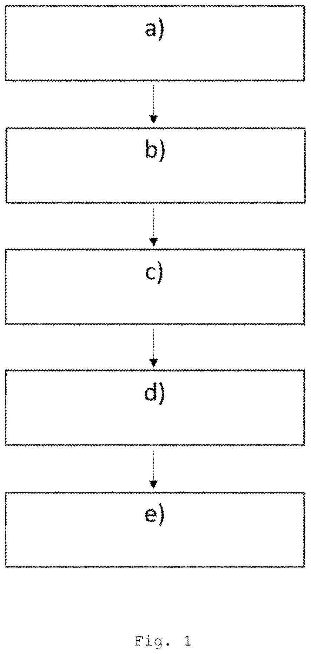

Fig. 1 zeigt eine schematische Darstellung eines Ausführungsbeispiels eines Verfahrens zum Überprüfen eines photovoltaischen Elements in einem Fließdiagramm.

Wenn das photovoltaische Element 1 größer ist als die Beleuchtungsfläche eines Sonnensimulators ist eine direkte Leistungsmessung nicht möglich. Ein elektrischer Funktionstest des photovoltaischen Elements 1 ist möglich, indem jeweils nur ein Teil des photovoltaischen Elements 1, das in einzelne Segmente 5 unterteilt ist, beleuchtet, Kennlinien 7 der einzelnen Segmente 5 ermittelt, und daraus eine Gesamtkennlinie 13 rekonstruiert bzw. zusammengesetzt wird.

Das Verfahren zum Überprüfen eines photovoltaischen Elements 1, bevorzugt zur Leistungsbestimmung und/oder zur Bestimmung von Defekten des photovoltaischen Elements 1, umfasst die folgenden Schritte: a) Bereitstellen eines photovoltaischen Elements 1, b) Bereitstellen einer Dunkelkennlinie 3 des photovoltaischen Elements 1 bei einer bestimmten an das photovoltaische Element 1 angelegten Spannung, c) Unterteilen des photovoltaischen Elements 1 in einzelne Segmente 5, d) Messen von Kennlinien 7 der einzelnen Segmente 5 des photovoltaischen Elements 1 in einer zeitlichen Abfolge, wobei die einzelnen Segmente 5 mittels einer Beleuchtungseinrichtung 9 bei der bestimmten an das photovoltaische Element 1 angelegten Spannung beleuchtet werden, wobei das photovoltaische Element 1 entlang einer Laufrichtung 11 relativ zu der Beleuchtungseinrichtung 9 und/oder die Beleuchtungseinrichtung 9 entlang einer Laufrichtung 11 relativ zu dem photovoltaischen Element 1 bewegt wird, und e) Ermitteln einer Gesamtkennlinie 13 des photovoltaischen Elements 1 in Abhängigkeit der Dunkelkennlinie 3 und den gemessenen Kennlinien 7 der einzelnen Segmente 5, so dass das photovoltaische Element 1 überprüfbar ist.

Das photovoltaische Element 1 wird dabei insbesondere in einer Laufrichtung 11 in einer Fertigungsanlage geführt.

Dadurch können photovoltaische Elemente 1 einer nahezu beliebigen Länge und/oder Breite mittels einer Beleuchtungseinrichtung 9 überprüft werden. Das Verfahren ist einfach anzuwenden und kostengünstig. Vorteilhafterweise wird eine Messung von langen und/oder großen photovoltaischen Elementen 1, insbesondere auch mit einer Länge und/oder Breite von mehr als 2 m, ermöglicht.

In einer Ausgestaltung der Erfindung werden die einzelnen Segmente 5 über deren vollständige Fläche 15, bevorzugt über deren vollständige photoaktive Fläche, beleuchtet, und/oder jeweils die einzelnen Segmente 5 des photovoltaischen Elements 1 und/oder die einzelnen Segmente 5 untereinander zumindest weitgehend homogen beleuchtet.

In einer weiteren Ausgestaltung der Erfindung wird die Gesamtkennlinie 13 des photovoltaischen Elements 1 in Schritt e) durch Aufsummieren von aus der Dunkelkennlinie 3 des photovoltaischen Elements 1 und aus den gemessenen Kennlinien 7 der einzelnen Segmente 5 ermittelten Photoströme ermittelt.

In einer weiteren Ausgestaltung der Erfindung weist ein Segment 5 des photovoltaischen Elements 1 in Laufrichtung 11 mit einem vorhergehenden Segment 5 und/oder mit einem folgenden Segment 5 zumindest weitgehend keine Überlappung und zumindest weitgehend keine Lücke auf.

In einer weiteren Ausgestaltung der Erfindung wird das photovoltaische Element 1, bevorzugt eine photoaktive Fläche des photovoltaischen Elements 1, vollständig von den einzelnen Segmenten 5 erfasst.

In einer weiteren Ausgestaltung der Erfindung wird die Dunkelkennlinie 3 des photovoltaischen Elements 1 in Schritt b) vor oder nach Schritt d) des Verfahrens bereitgestellt, bevorzugt gemessen, und/oder werden die Schritte c) und d) gemeinsam durchgeführt.

In einer weiteren Ausgestaltung der Erfindung ist die Dunkelkennlinie 3 des photovoltaischen Elements 1 in Schritt b) eine Dunkelkennlinie 3 bei vollständiger oder weitgehend vollständiger Dunkelheit.

In einer weiteren Ausgestaltung der Erfindung wird bei einem vorhandenen Umgebungslicht mindestens eine weitere Kennlinie 17 bei der bestimmten an das photovoltaische Element 1 angelegten Spannung und dem Umgebungslicht gemessen, wobei die einzelnen Segmente 5 und/oder das photovoltaische Element 1 nicht mittels der Beleuchtungseinrichtung 9 beleuchtet werden, und wobei die Gesamtkennlinie 13 des photovoltaischen Elements 1 in Schritt e) zusätzlich in Abhängigkeit der mindestens einen weiteren Kennlinie 17 bei dem Umgebungslicht ermittelt wird, und/oder die Gesamtkennlinie 13 des photovoltaischen Elements 1 in Schritt e) durch zusätzliches Abziehen der von aus den weiteren gemessenen Kennlinien 17 der einzelnen Segmente 5 bei dem Umgebungslicht ermittelten Photoströme des Umgebungslichts ermittelt wird.

In einer weiteren Ausgestaltung der Erfindung beträgt eine Länge der Segmente 5 in Laufrichtung 11 10 cm bis 10 m, bevorzugt 10 cm bis 2 m, und/oder wird das photovoltaische Element 1 in Abhängigkeit einer mittels der Beleuchtungseinrichtung 9 beleuchteten Fläche 19 in einzelne Segmente 5 unterteilt. In einer alternativen Ausgestaltung der Erfindung beträgt die Länge der einzelnen Segmente mindestens 1/10 der Länge der photoaktiven Fläche des photovoltaischen Elements.

In einer weiteren Ausgestaltung der Erfindung wird das Verfahren in einem Rolle-zu-Rolle Verfahren durchgeführt, und/oder ist das photovoltaische Element 1 ein flexibles photovoltaisches Element 1, wobei während des Verfahrens bevorzugt ein erstes Ende und/oder ein zweites Ende des photovoltaischen Elements 1 teilweise aufgewickelt vorliegt.

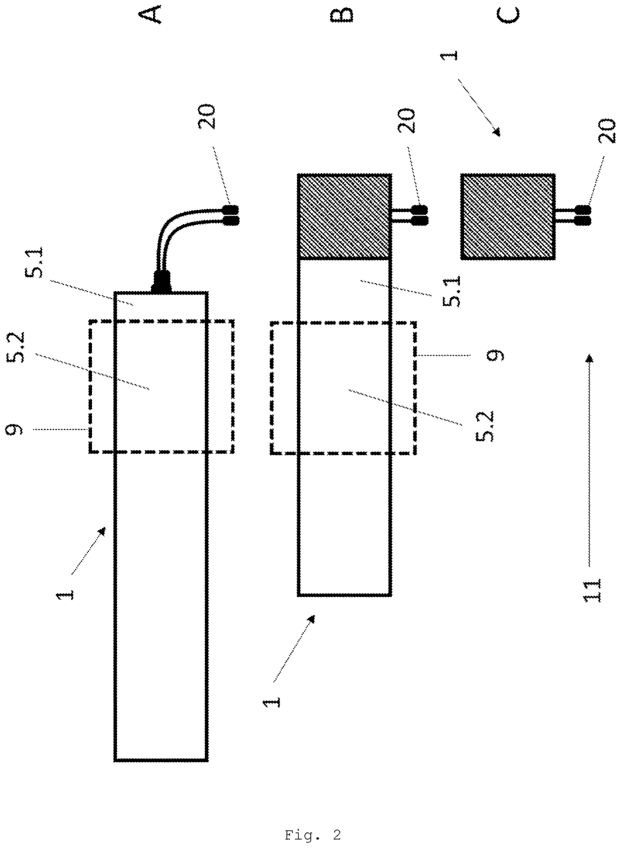

Fig. 2 zeigt eine schematische Darstellung eines Ausführungsbeispiels mehrerer Anordnungen eines photovoltaischen Elements 1 relativ zu einer Beleuchtungseinrichtung 9 während eines Verfahrens zum Überprüfen eines photovoltaischen Elements 1 in einer Draufsicht. Gleiche und funktionsgleiche Elemente sind mit den gleichen Bezugszeichen versehen, so dass insofern auf die vorangegangene Beschreibung verwiesen wird.

In einem initialen Schritt A wird in diesem Ausführungsbeispiel ein erstes Segment 5.1 des photovoltaischen Elements 1, an einem Ende des photovoltaischen Elements 1, von der Beleuchtungseinrichtung 9 beleuchtet, wobei unter einer bestimmten an das photovoltaische Element 1 angelegten Spannung, eine Kennlinie 7 des ersten Segments 5.1 gemessen wird, insbesondere Photoströme ermittelt werden, wobei die anderen Segmente 5 zumindest weitgehend abgedunkelt sind. Die bestimmte Spannung kann über ein Anschlusselement 20 an das photovoltaische Element 1 angelegt werden.

In einem weiteren Schritt B wird das photovoltaische Element 1 relativ zu der Beleuchtungseinrichtung 9 in einer Laufrichtung 11 bewegt, so dass ein zweites Segment 5.2 des photovoltaischen Elements 1 von der Beleuchtungseinrichtung 9 beleuchtet wird. Ein Ende des photovoltaischen Elements 1 mit dem darauf angeordneten ersten Segment 5.1 kann dabei zumindest teilweise auf ein Aufwickelelement aufgewickelt werden. Analog zu Schritt A wird auch in Schritt B unter einer bestimmten an das photovoltaische Element 1 angelegten Spannung, eine Kennlinie 7 des zweiten Segments 5.2 ermittelt, insbesondere werden Photoströme ermittelt, wobei die anderen Segmente 5 zumindest weitgehend abgedunkelt sind. In Abhängigkeit der Länge des photovoltaischen Elements 1 und der daraus resultierenden Anzahl einzelner Segmente 5 wird das Verfahren so lange durchgeführt, bis die Kennlinien 7, insbesondere die Photoströme, aller einzelnen Segmente 5 gemessen sind. In diesem Ausführungsbeispiel wurden die einzelnen Segmente 5 mit 1000 W/m$^2$ beleuchtet. Das photovoltaische Element 1 ist dabei insbesondere derart in einzelne Segmente 5 unterteilt, dass zumindest weitgehend keine Lücke zwischen einander auf dem photovoltaischen Element 1 folgender einzelner Segmente 5, beispielsweise des ersten Segments 5.1 mit dem zweiten Segment 5.2, und zumindest weitgehend keine Überlappung zwischen einander auf dem photovoltaischen Element 1 folgender Segmente 5, beispielsweise des ersten Segments 5.1 mit dem zweiten Segment 5.2, auftreten. Die Länge der einzelnen Segmente 5 kann dabei einer Fläche 19 der Beleuchtungseinrichtung 9 angepasst werden. An den beiden Enden des photovoltaischen Elements 1 muss ein Ende eines Segments 5 nicht nahtlos anliegen, da nur im aktiven Bereich des photovoltaischen Elements 1 Photostrom generiert wird. Jeder Bereich des photovoltaischen Elements 1 darf nur einmal beleuchtet werden.

In einem Schritt C ist das photovoltaische Element 1 vollständig über die einzelnen Segmente 5 vermessen, und liegt in diesem Ausführungsbeispiel vollständig aufgerollt vor. Eine für das Verfahren erforderlich Dunkelkennlinie 3 kann durch Messen der Kennlinie des photovoltaischen Elements 1, insbesondere der vollständigen photoaktiven Fläche des photovoltaischen Elements, bei der bestimmten Spannung ohne Beleuchtung, insbesondere bei möglichst großer Dunkelheit ohne Umgebungslicht, beispielsweise in dem aufgewickelten Zustand des photovoltaischen Elements 1, erhalten werden. Die Gesamtkennlinie 13 des photovoltaischen Elements 1 wird aus den gemessenen Kennlinien 7 der einzelnen Segmente 5 und der Dunkelkennlinie 3 zusammengesetzt.

Das photovoltaische Element 1 besteht in einem Ausführungsbeispiel aus einer Folge dünner Schichten, dem Schichtsystem, mit mindestens einer photoaktiven Schicht, welche bevorzugt im Vakuum aufgedampft oder aus einer Lösung prozessiert werden. Die elektrische Anbindung kann durch Metallschichten, transparente leitfähige Oxide und/oder transparente leitfähige Polymere erfolgen. Das photovoltaische Elements 1 kann ein flexibles photovoltaisches Element 1 sein und während oder am Ende des Verfahrens zumindest teilweise aufgewickelt vorliegen.

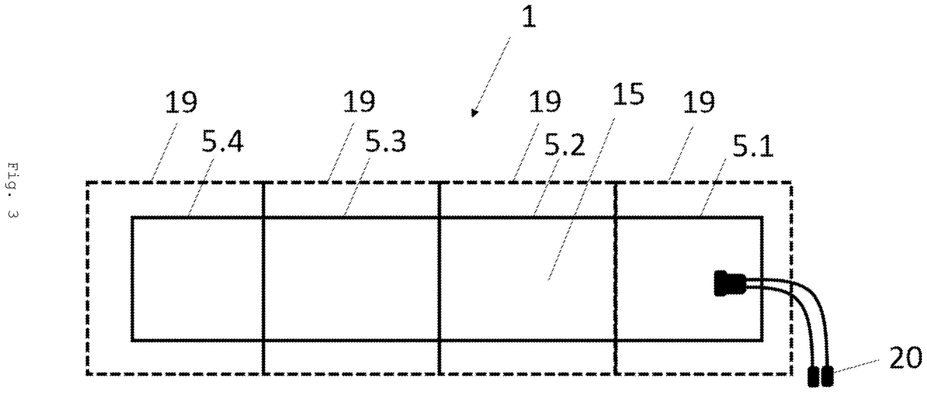

Fig. 3 zeigt eine schematische Darstellung eines Ausführungsbeispiels eines Unterteilens eines photovoltaischen Elements 1 in einzelne Segmente 5 in einer Draufsicht. Gleiche und funktionsgleiche Elemente sind mit den gleichen Bezugszeichen versehen, so dass insofern auf die vorangegangene Beschreibung verwiesen wird.

Das photovoltaische Element 1 ist in diesem Ausführungsbeispiel in einzelne Segmente 5.1, 5.2, 5.3, 5.4 unterteilt. Die einzelnen Segmente 5 können dabei eine unterschiedliche Länge in Laufrichtung des photovoltaischen Elements 1 aufweisen, beispielsweise sind die Segmente 5.2, 5.3 gleich lang ausgebildet, während die Segmente 5.1, 5.4 im Vergleich dazu kürzer ausgebildet sind. Die einzelnen Segmente 5 werden in dem Verfahren in einer zeitlichen Abfolge vollständig von der Fläche 19 der Beleuchtungseinrichtung 9 beleuchtet.

In diesem Ausführungsbeispiel wird das photovoltaische Element 1 in einem Rolle-zu-Rolle Verfahren hergestellt und/oder gemessen. Das erste Ende des photovoltaischen Elements 1 und/oder das zweite Ende des photovoltaischen Elements 1 liegen während des Verfahrens zumindest teilweise aufgerollt vor, wobei ein zu messendes Segment 5 nicht aufgerollt vorliegt, so dass eine Kennlinie des Segments 5 unter Beleuchtung mittels einer Beleuchtungseinrichtung 9 gemessen werden kann. Beim Messen der einzelnen Segmente 5 wird eine bestimmte Spannung an das photovoltaische Element 1 angelegt und der Photostrom in Abhängigkeit eines Spannungsverlaufs ermittelt.

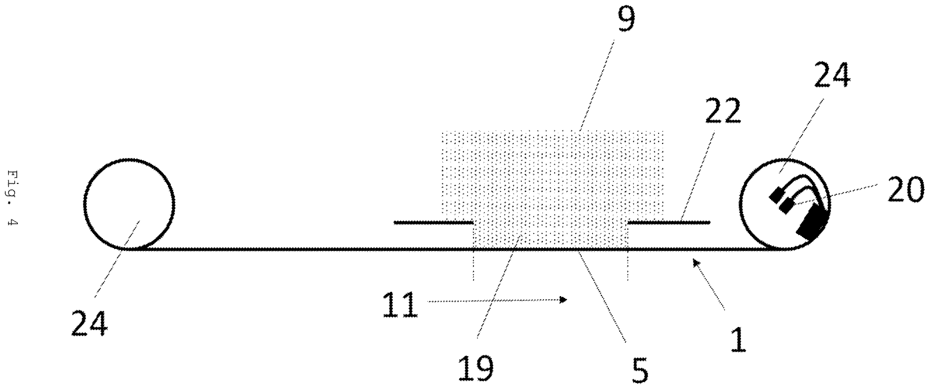

Fig. 4 zeigt eine schematische Darstellung eines Ausführungsbeispiels einer Vorrichtung zum Durchführen eines Verfahrens zum Überprüfen eines photovoltaischen Elements 1 in einer Seitenansicht. Gleiche und funktionsgleiche Elemente sind mit den gleichen Bezugszeichen versehen, so dass insofern auf die vorangegangene Beschreibung verwiesen wird.

Die Vorrichtung, eingerichtet zum Durchführen eines erfindungsgemäßen Verfahrens, weist in diesem Ausführungsbeispiel eine Beleuchtungseinrichtung 9 zum Beleuchten des photovoltaischen Elements 1, eine Abdeckeinrichtung 22 zum Begrenzen der mittels der Beleuchtungseinrichtung 9 beleuchteten Fläche 19, eine elektrischen Anschlusselement 20 zum Anlegen einer bestimmten Spannung an das photovoltaische Element 1, und eine Transporteinheit 24 mit zwei Aufwickelelementen zum Bewegen des photovoltaischen Elements 1 auf. Die Vorrichtung ist insbesondere für ein Rolle-zu-Rolle Verfahren ausgebildet, wobei insbesondere das photovoltaische Element 1 relativ zu der Beleuchtungseinrichtung 9 bewegt wird. Im Bereich der Beleuchtungseinrichtung 9 ist das dort befindliche Segment 5 mit seiner der Beleuchtungseinrichtung 9 zugewandten Oberfläche mit der photoaktiven Schicht möglichst eben angeordnet. Die Transporteinheit 24 bewegt das photovoltaische Element derart, dass nach dem Messen eines Segments 5 ein folgendes Segment 5 unter die Beleuchtungseinrichtung 9 bewegt wird. Die Abdeckeinrichtung 22 gewährleistet, dass die einzelnen Segmente 5 mittels der Beleuchtungseinrichtung 9 getrennt voneinander beleuchtet werden können, so dass in einer zeitlichen Abfolge die einzelnen Segmente 5 gemessen werden können.

Das photovoltaische Element 1 wird dabei unterteilt in einzelne Segmente 5 gemessen. Dazu wird jedes Segment 5 mittels der Beleuchtungseinrichtung 9 und einer zwischen der Beleuchtungseinrichtung 9 und dem photovoltaischen Element 1 angeordneten Abdeckeinrichtung 22, bevorzugt einer Aperturmaske, beleuchtet. Die Abdeckeinrichtung 22 wird dann relativ zu dem photovoltaischen Element 1 oder das photovoltaische Element 1 relativ zu der Abdeckeinrichtung 22 bewegt und so alle einzelnen Segmente 5, also das ganze photovoltaische Element 1, gemessen. Das einzelne Segment 5 oder das photovoltaische Element 1 als Ganzes kann, falls die Dunkelkennlinie 3 noch nicht vorliegt, abgedunkelt ohne Beleuchtung gemessen werden, um die Dunkelkennlinie 3 zu erhalten. Die Gesamtkennlinie 13 ergibt sich aus der Dunkelkennlinie 3, die für alle Messungen gleich ist, und den Kennlinien 7 der einzelnen Segmente 5.

Die Vorrichtung zum Durchführen des Verfahrens weist in einer Ausgestaltung zusätzlich eine im Bereich der Vorrichtung angeordnete Prüfeinrichtung zum Messen und/oder Überprüfen der einzelnen Segmente 5 und des photovoltaischen Elements 1 auf (nicht dargestellt). Die Prüfeinrichtung ist dabei mit der Beleuchtungseinrichtung 9, der Abdeckeinrichtung 22, dem Anschlusselement 20 und/oder der Transporteinheit 24 wirkverbunden.

Das photovoltaische Element 1 kann in diesem Ausführungsbeispiel an beiden Enden an Aufwickelelementen zumindest teilweise aufgewickelt werden, dabei ist das photovoltaische Element 1 zwischen den Aufwickelelementen angeordnet. Zum Bewegen des photovoltaischen Elements 1 in der Vorrichtung relativ zu der Beleuchtungseinrichtung 9 wird das photovoltaische Element 1 auf- bzw. abgewickelt.

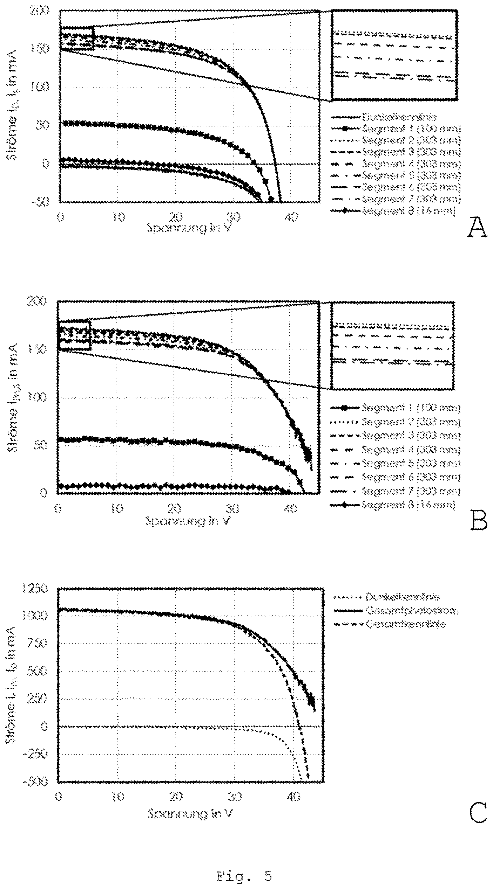

Fig. 5 zeigt in einem Ausführungsbeispiel eine nach einem erfindungsgemäßen Verfahren aus einer Dunkelkennlinie 3 und Kennlinien 7 einzelner Segmente 5 ermittelte Gesamtkennlinie 13 eines photovoltaischen Elements 1. Gleiche und funktionsgleiche Elemente sind mit den gleichen Bezugszeichen versehen, so dass insofern auf die vorangegangene Beschreibung verwiesen wird.

In Fig. 5 wird das Prinzip des erfindungsgemäßen Verfahrens in einem Ausführungsbeispiel verdeutlicht, wobei die Gesamtkennlinie 13 des photovoltaischen Elements 1 aus den Kennlinien 7 einzelner Segmente 5 und der Dunkelkennlinie 3 des photovoltaischen Elements 1 zusammengesetzt wird. Das photovoltaische Element 1 weist eine Länge der photoaktiven Fläche von 1934 mm auf, wobei das photovoltaische Element 1 derart in einzelne Segmente 5 unterteilt ist, dass die Segmente 5 an den Enden des photovoltaischen Elements 1 mit 100 mm und 16 mm etwas kürzer ausgebildet sind als die dazwischenliegenden 6 Segmente 5 mit einer Länge von jeweils 303 mm.

In Fig. 5 A sind eine Dunkelkennlinie 3 und Kennlinien 7 aller einzelnen Segmente 5 unter Beleuchtung des photovoltaischen Elements 1 aufgetragen. Der vergrößerte Ausschnitt zeigt zur Verdeutlichung den Verlauf nahe beieinanderliegender Kennlinien 7 der Segmente 5.

In Fig. 5 B sind die Photoströme, die aus den Kennlinien 7 aller einzelnen Segmente 5 unter Beleuchtung (siehe Fig. 5 A) ermittelt wurden, aufgetragen, wobei ein Photostrom der Dunkelkennlinie 3 des photovoltaischen Elements 1 von den Photoströmen der Kennlinien 7 der einzelnen beleuchteten Segmente 5 abgezogen wurde, wobei die Photoströme $I_{Ph,s}(V)$ der einzelnen Segmente 5 erhalten wurden. Der vergrößerte Ausschnitt zeigt zur Verdeutlichung den Verlauf nahe beieinanderliegender Photoströme der Segmente 5.

In Fig. 5 C sind die Dunkelkennlinie 3 des photovoltaischen Elements 1, die Summe der Photoströme aller einzelnen Segmente 5 (siehe Fig. 5 B), und die daraus zusammengesetzte Gesamtkennlinie 13 des photovoltaischen Elements 1 aufgetragen.

Das photovoltaische Element 1 kann durch zwei Strom-Spannungs-Kennlinien beschrieben werden: Die Dunkelkennlinie 3 $I_D(V)$, und einer Kennlinie I(V) unter Beleuchtung. Der unter Beleuchtung des photovoltaischen Elements 1 erhaltene Strom ist der Photostrom, $I_{Ph}(V)$ :

$$I(V) = I_D(V) + I_{Ph}(V) \tag{1}$$

Die Gesamtkennlinie 13 des photovoltaischen Elements 1 kann aus den Kennlinien 7 der einzelnen Segmente 5 zusammengesetzt werden, insbesondere können die Photoströme $I_{Ph,S}(V)$ der einzelnen Segmente 5, die aus einzelnen Segmenten 5 des photovoltaischen Elements 1 ermittelt werden, zu dem Gesamtphotostrom $I_{Ph}(V)$ des photovoltaischen Elements 1 aufsummiert werden:

$$I(V) = I_D(V) + \sum_S I_{Ph,S}(V) \tag{2}$$

Die Gesamtkennlinie I(V) des vollständig beleuchteten photovoltaischen Elements 1 kann also aus den gemessenen Kennlinien 7 der einzelnen beleuchteten Segmente 5 des photovoltaischen Elements $I_s(V)$ und der Dunkelkennlinie 3 $I_D(V)$ zusammengesetzt werden:

$$I(V) = I_D(V) + \sum_S [I_S(V) - I_D(V)] = -(n-1) \cdot I_D(V) \sum_S I_S(V) \tag{3}$$

wobei n die Anzahl der einzelnen Segmente 5 ist. Die Dunkelkennlinie 3 $I_D(V)$ ist für alle Messungen gleich.
Unter nicht ganz idealen Bedingungen ist beim Messen der Dunkelkennlinie 3 und/oder der Kennlinien 7 der einzelnen Segmente 5 störendes Umgebungslicht, insbesondere Streulicht, vorhanden. Dadurch ist beim Messen der Dunkelkennlinie 3 das photovoltaische Element 1 nicht vollständig abgedunkelt und es ergibt sich zumindest teilweise aus dem Umgebungslicht ein zusätzlicher Strom, und/oder ist beim Messen der Kennlinien 7 der einzelnen Segmente 5 unter Beleuchtung durch das zusätzliche Umgebungslicht ein zusätzlicher Photostrom vorhanden, der den ermittelten Photostrom verfälscht, insbesondere in gleichen Maßen verfälscht. In einer Ausgestaltung der Erfindung wird dieser zusätzlich durch das Umgebungslicht erhaltene Photostrom bei der Ermittlung der Dunkelkennlinie 3 und/oder der Kennlinien 7 der einzelnen Segmente 5 jeweils durch das Aufsummieren einer weiteren Kennlinie 17, aus der ein Photostrom $I_{Ph,amb}(V)$ in Abhängigkeit des Umgebungslichts ermittelt wird, berücksichtigt.
Wenn die einzelnen Segmente 5 während der Bestimmung der Dunkelkennlinie 3 nicht völlig abgedunkelt sind, beispielsweise durch Umgebungslicht, insbesondere Streulicht, dann fließt ein weiterer Photostrom $I_{Ph,amb}(V)$, in Abhängigkeit des Umgebungslichts, der sich zu dem erhaltenen Photostrom durch Beleuchtung der einzelnen Segmente 5 aufsummiert:

$$I(V) = I_D(V) + I_{Ph}(V) + I_{Ph,amb}(V) \tag{4}$$

Die Kennlinien 7 der einzelnen beleuchteten Segmente 5 I(V) erhält man aus:

$$I(V) = I_D(V) + \sum_S [I_S(V) - I_{amb,S}(V)] \tag{5}$$

wobei $I_{amb,S}(V)$ die Kennlinie 7 I(V) ist, die unter Umgebungslicht bestimmt wird:

$$I_{amb,S}(V) = I_D(V) + I_{Ph,amb}(V) \tag{6}$$

Die Gesamtkennlinie 13 I(V) des photovoltaischen Elements 1 kann daraus aus den einzelnen beleuchteten Segmenten 5, insbesondere unter einer definierten Beleuchtung ($1000 W/m^2$), und der nicht definierten Beleuchtung unter Umgebungslicht erhalten werden. Zur Ermittlung der Gesamtkennlinie 13 des photovoltaischen Elements 1 ist nur eine einzige Dunkelkennlinie 3 $I_D(V)$ des photovoltaischen Elements 1 notwendig. Diese Dunkelkennlinie 3 kann entweder aus bereits vorhandenen Daten bereitgestellt werden oder zu einem Zeitpunkt des Verfahrens vor der Ermittlung der Gesamtkennlinie 13 in Schritt e) gemessen werden. Die Dunkelkennlinie 3 muss nicht für jedes einzelne Segment 5 gemessen werden.

Der Strom eines jeden einzelnen Segments 5 ist:

$$I_S(V) = I_D(V) + I_{Ph}(V) + I_{Ph,amb}(V) \tag{7}$$

Damit ist Gesamtstrom des photovoltaischen Elements 1:

$$I(V) = I_D(V) + \sum_S \left[ I_S(V) - I_{amb,S}(V) \right] \tag{8}$$

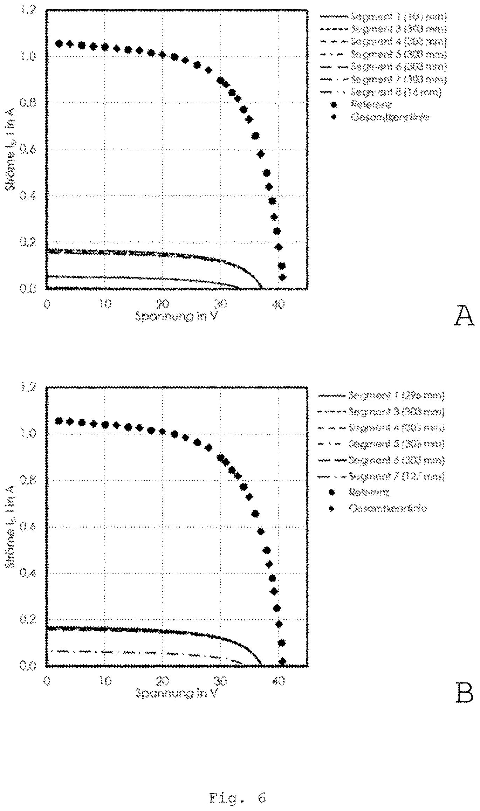

Fig. 6 zeigt in einem Ausführungsbeispiel einen Einfluss einer Positionierung einzelner Segmente 5 bei einem Unterteilen eines photovoltaischen Elements 1 in einem erfindungsgemäßen Verfahren. Gleiche und funktionsgleiche Elemente sind mit den gleichen Bezugszeichen versehen, so dass insofern auf die vorangegangene Beschreibung verwiesen wird.

Der Einfluss der Positionierung der einzelnen Segmente 5 beim Unterteilen des photovoltaischen Elements 1 wurde untersucht. In Fig. 6 A und Fig. 6 B sind jeweils die Kennlinien 7 einzelner Segmente 5 und die daraus erhaltene Gesamtkennlinie 13 eines photovoltaischen Elements 1 bei unterschiedlicher Positionierung der einzelnen Segmente 5 aufgezeigt. In Fig. A beträgt die Länge des ersten Segments 5 100 mm, die Länge der folgenden sechs Segmente 5 jeweils 303 mm, und die Länge des letzten Segments 5 16 mm. In Fig. B beträgt die Länge des ersten Segments 5 296 mm, die Länge der folgenden fünf Segmente 5 jeweils 303 mm, und die Länge des letzten Segments 5 127 mm.

In beiden Positionierungen der einzelnen Segmente 5 beim Unterteilen des photovoltaischen Elements 1 stimmt die erhaltene Gesamtkennlinie 13 jeweils mit einer Referenz-Kennlinie überein. Die Referenz-Kennlinie wurde durch Messen der Gesamtkennlinie 13 des photovoltaischen Elements 1 bei vollständiger Beleuchtung über dessen gesamte Länge, einem sogenannten Vollflash, erhalten. In dem erfindungsgemäßen Verfahren reproduzieren beide Positionierungen die Referenz-Kennlinie, die Abweichung des Verlaufs der beiden erhaltenen Gesamtkennlinien 13 beträgt jeweils nicht mehr als 1% im Vergleich zur Referenz-Kennlinie. Das erfindungsgemäße Verfahren ist demnach weitgehend unabhängig von der Positionierung der einzelnen Segmente 5 beim Unterteilen des photovoltaischen Elements 1.

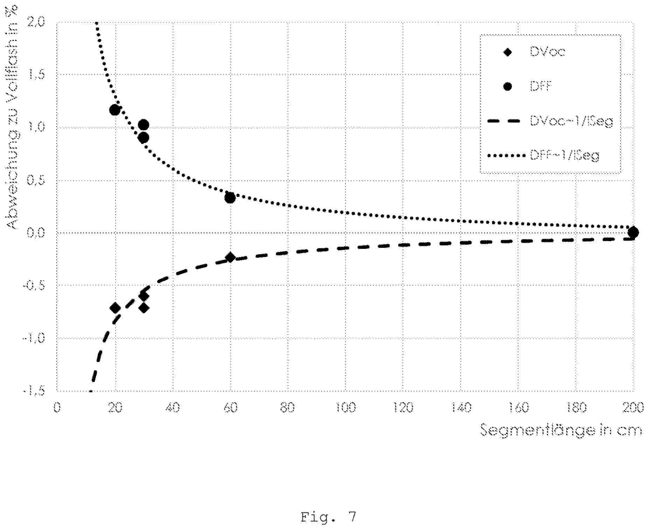

Fig. 7 zeigt in einem Ausführungsbeispiel einen Einfluss einer Länge der Segmente 5 bei einem Unterteilen eines photovoltaischen Elements 1 in einem erfindungsgemäßen Verfahren. Gleiche und funktionsgleiche Elemente sind mit den gleichen Bezugszeichen versehen, so dass insofern auf die vorangegangene Beschreibung verwiesen wird.

Der Einfluss der Länge der einzelnen Segmente 5, insbesondere der Größe der einzelnen Segmente 5, beim Unterteilen des photovoltaischen Elements 1 wurde untersucht. Gemäß dem erfindungsgemäßen Verfahren wurde das photovoltaische Element 1 jeweils in Segmente 5 der Länge 10 cm, 20 cm, 30 cm, 60 cm und 2 m unterteilt und gemessen.

Aus den dadurch erhaltenen Gesamtkennlinien 13 in Abhängigkeit der Länge der Segmente 5 wurden die Leerlaufspannung $V_{oc}$ und der Füllfaktor FF des photovoltaischen Elements 1 berechnet. Die erhaltenen Werte wurden aus einer Gesamtkennlinie des photovoltaischen Elements 1 durch vollständige Beleuchtung über dessen gesamte Länge und der daraus berechneten Leerlaufspannung $V_{oc}$ und Füllfaktor FF verglichen. Die daraus erhaltenen Abweichungen $DV_{oc}$ und DFF der erfindungsgemäßen Messungen im Vergleich zu Messungen bei vollständiger Beleuchtung des photovoltaischen Elements 1 über dessen gesamte Länge sind in Fig. 7 aufgetragen. Die Abweichung der Leerlaufspannung $V_{oc}$ liegt bei einer Länge der Segmente 5 von mindestens 20 cm unter 1%, und die Abweichung des Füllfaktors liegt bei einer Länge der Segmente 5 von mindestens 20 cm unter 1,2%. Auch Längen der einzelnen Segmente 5 von 10 cm zeigen noch eine geringe Abweichung.

Die Segmente 5, insbesondere die Fläche der Segmente 5, kann nicht beliebig klein sein, da bei einer Länge der Segmente 5 von weniger als 10 cm die Abweichungen $DV_{oc}$ und DFF deutlich zunehmen. Das erfindungsgemäße Verfahren mit Segmenten 5 der Länge von 20 cm oder mehr reproduzieren die bei vollständiger Beleuchtung des photovoltaischen Elements 1 über dessen gesamte Länge erhaltenen Werte sehr gut, dies gilt insbesondere für Segmente 5 der Länge von mehr als 60 cm.

**Patentansprüche**

1. Verfahren zum Überprüfen eines photovoltaischen Elements (1), bevorzugt zur Leistungsbestimmung und/oder zur Bestimmung von Defekten des photovoltaischen Elements (1), umfassend die folgenden Schritte:

   a) Bereitstellen eines photovoltaischen Elements (1),
   b) Bereitstellen einer Dunkelkennlinie (3) des photovoltaischen Elements (1) bei einer bestimmten an das photovoltaische Element (1) angelegten Spannung,

c) Unterteilen des photovoltaischen Elements (1) in einzelne Segmente (5),

d) Messen von Kennlinien (7) der einzelnen Segmente (5) des photovoltaischen Elements (1) in einer zeitlichen Abfolge, wobei die einzelnen Segmente (5) mittels einer Beleuchtungseinrichtung (9) bei der bestimmten an das photovoltaische Element (1) angelegten Spannung beleuchtet werden, wobei das photovoltaische Element (1) entlang einer Laufrichtung (11) relativ zu der Beleuchtungseinrichtung (9) und/oder die Beleuchtungseinrichtung (9) entlang einer Laufrichtung (11) relativ zu dem photovoltaischen Element (1) bewegt wird, und

e) Ermitteln einer Gesamtkennlinie (13) des photovoltaischen Elements (1) in Abhängigkeit der Dunkelkennlinie (3) und den gemessenen Kennlinien (7) der einzelnen Segmente (5), so dass das photovoltaische Element (1) überprüfbar ist.

2. Verfahren nach Anspruch 1, wobei die einzelnen Segmente (5) über deren vollständige Fläche (15), bevorzugt über deren vollständige photoaktive Fläche, beleuchtet werden, und/oder jeweils die einzelnen Segmente (5) des photovoltaischen Elements (1) und/oder die einzelnen Segmente (5) untereinander zumindest weitgehend homogen beleuchtet werden.

3. Verfahren nach Anspruch 1 oder 2, wobei die Gesamtkennlinie (13) des photovoltaischen Elements (1) in Schritt e) durch Aufsummieren von aus der Dunkelkennlinie (3) des photovoltaischen Elements (1) und aus den gemessenen Kennlinien (7) der einzelnen Segmente (5) ermittelten Photoströme ermittelt wird.

4. Verfahren nach einem der vorhergehenden Ansprüche, wobei ein Segment (5) des photovoltaischen Elements (1) in Laufrichtung (11) mit einem vorhergehenden Segment (5) und/oder mit einem folgenden Segment (5) zumindest weitgehend keine Überlappung und zumindest weitgehend keine Lücke aufweist, und/oder das photovoltaische Element (1), bevorzugt eine photoaktive Fläche des photovoltaischen Elements (1), vollständig von den einzelnen Segmenten (5) erfasst wird.

5. Verfahren nach einem der vorhergehenden Ansprüche, wobei die Dunkelkennlinie (3) des photovoltaischen Elements (1) in Schritt b) vor oder nach Schritt d) des Verfahrens bereitgestellt wird, bevorzugt gemessen wird, und/oder wobei die Schritte c) und d) gemeinsam durchgeführt werden.

6. Verfahren nach einem der vorhergehenden Ansprüche, wobei die Dunkelkennlinie (3) des photovoltaischen Elements (1) in Schritt b) eine Dunkelkennlinie (3) bei vollständiger oder weitgehend vollständiger Dunkelheit ist.

7. Verfahren nach einem der vorhergehenden Ansprüche, wobei bei einem vorhandenen Umgebungslicht mindestens eine weitere Kennlinie (17) bei der bestimmten an das photovoltaische Element (1) angelegten Spannung und dem Umgebungslicht gemessen wird, wobei die einzelnen Segmente (5) und/oder das photovoltaische Element (1) nicht mittels der Beleuchtungseinrichtung (9) beleuchtet werden, und wobei die Gesamtkennlinie (13) des photovoltaischen Elements (1) in Schritt e) zusätzlich in Abhängigkeit der mindestens einen weiteren Kennlinie (17) bei dem Umgebungslicht ermittelt wird, und/oder die Gesamtkennlinie (13) des photovoltaischen Elements (1) in Schritt e) durch zusätzliches Abziehen der von aus den weiteren gemessenen Kennlinien (17) der einzelnen Segmente (5) bei dem Umgebungslicht ermittelten Photoströme des Umgebungslichts ermittelt wird.

8. Verfahren nach einem der vorhergehenden Ansprüche, wobei eine Länge der Segmente (5) in Laufrichtung (11) 10 cm bis 10 m beträgt, bevorzugt 10 cm bis 2 m, und/oder wobei das photovoltaische Element (1) in Abhängigkeit einer mittels der Beleuchtungseinrichtung (9) beleuchteten Fläche (19) in einzelne Segmente (5) unterteilt wird.

9. Verfahren nach einem der vorhergehenden Ansprüche, wobei das Verfahren in einem Rolle-zu-Rolle Verfahren durchgeführt wird, und/oder wobei das photovoltaische Element (1) ein flexibles photovoltaisches Element (1) ist, wobei während des Verfahrens bevorzugt ein erstes Ende und/oder ein zweites Ende des photovoltaischen Elements (1) teilweise aufgewickelt vorliegt.

**Claims**

1. Method for inspecting a photovoltaic element (1), preferably for determining the performance of and/or for determining defects in the photovoltaic element (1), comprising the following steps:

a) providing a photovoltaic element (1),

b) providing a dark characteristic curve (3) of the photovoltaic element (1) at a specific voltage applied to the photovoltaic element (1),

c) dividing the photovoltaic element (1) into individual segments (5),

d) measuring characteristic curves (7) of the individual segments (5) of the photovoltaic element (1) in a time sequence, wherein the individual segments (5) are illuminated by way of an illumination device (9) at the specific voltage applied to the photovoltaic element (1), wherein the photovoltaic element (1) is moved along a running direction (11) relative to the illumination device (9) and/or the illumination device (9) is moved along a running direction (11) relative to the photovoltaic element (1), and

e) ascertaining an overall characteristic curve (13) of the photovoltaic element (1) as a function of the dark characteristic curve (3) and the measured characteristic curves (7) of the individual segments (5), such that the photovoltaic element (1) is able to be inspected.

2. The method according to Claim 1, wherein the individual segments (5) are illuminated over their entire area (15), preferably over their entire photoactive area, and/or the individual segments (5) of the photovoltaic element (1) and/or the individual segments (5) among themselves are each illuminated at least largely homogeneously.

3. The method according to Claim 1 or 2, wherein the overall characteristic curve (13) of the photovoltaic element (1) is ascertained in step e) by summing photocurrents ascertained from the dark characteristic curve (3) of the photovoltaic element (1) and from the measured characteristic curves (7) of the individual segments (5).

4. The method according to one of the preceding claims, wherein a segment (5) of the photovoltaic element (1) has at least largely no overlap and at least largely no gap with a previous segment (5) and/or with a following segment (5) in the running direction (11), and/or the photovoltaic element (1), preferably a photoactive area of the photovoltaic element (1), is completely covered by the individual segments (5).

5. The method according to one of the preceding claims, wherein the dark characteristic curve (3) of the photovoltaic element (1) is provided, preferably is measured, in step b) before or after step d) of the method, and/or wherein steps c) and d) are performed together.

6. The method according to one of the preceding claims, wherein the dark characteristic curve (3) of the photovoltaic element (1) in step b) is a dark characteristic curve (3) in complete or largely complete darkness.

7. The method according to one of the preceding claims, wherein, when ambient light is present, at least one further characteristic curve (17) is measured at the specific voltage applied to the photovoltaic element (1) and in ambient light, wherein the individual segments (5) and/or the photovoltaic element (1) are not illuminated by way of the illumination device (9), and wherein the overall characteristic curve (13) of the photovoltaic element (1) is additionally ascertained in step e) as a function of the at least one further characteristic curve (17) in ambient light, and/or the overall characteristic curve (13) of the photovoltaic element (1) is ascertained in step e) by additionally subtracting the photocurrents of ambient light ascertained from the further measured characteristic curves (17) of the individual segments (5) in ambient light.

8. The method according to one of the preceding claims, wherein a length of the segments (5) in the running direction (11) is 10 cm to 10 m, preferably 10 cm to 2 m, and/or wherein the photovoltaic element (1) is divided into individual segments (5) depending on an area (19) illuminated by way of the illumination device (9).

9. The method according to one of the preceding claims, wherein the method is performed in a roll-to-roll process, and/or wherein the photovoltaic element (1) is a flexible photovoltaic element (1), wherein, during the method, a first end and/or a second end of the photovoltaic element (1) is preferably present in partially wound-up form.

**Revendications**

1. Procédé de contrôle d'un élément photovoltaïque (1), de préférence pour déterminer les performances et/ou pour déterminer les défauts de l'élément photovoltaïque (1), ledit procédé comprenant les étapes suivantes :

a) fournir un élément photovoltaïque (1),

b) fournir une courbe caractéristique sombre (3) de l'élément photovoltaïque (1) pour une tension déterminée appliquée à l'élément photovoltaïque (1),

c) diviser l'élément photovoltaïque (1) en segments individuels (5),

d) mesurer les courbes caractéristiques (7) des différents segments (5) de l'élément photovoltaïque (1) dans une séquence temporelle, les segments individuels (5) étant éclairés au moyen d'un dispositif d'éclairage (9) pour la tension déterminée appliquée à l'élément photovoltaïque (1), l'élément photovoltaïque (1) étant déplacé suivant une direction de déplacement (11) par rapport au dispositif d'éclairage (9) et/ou le dispositif d'éclairage (9) étant déplacé suivant une direction de déplacement (11) par rapport à l'élément photovoltaïque (1), et

e) déterminer une courbe caractéristique totale (13) de l'élément photovoltaïque (1) en fonction de la courbe caractéristique sombre (3) et des courbes caractéristiques mesurées (7) des segments individuels (5) de façon à pouvoir contrôler l'élément photovoltaïque (1).

2.  Procédé selon la revendication 1, les segments individuels (5) étant éclairés sur toute leur surface (15), de préférence sur toute leur surface photo-active, et/ou les segments individuels (5) de l'élément photovoltaïque (1) et/ou les segments individuels (5) les uns par rapport aux autres étant éclairés de manière homogène au moins dans une large mesure.

3.  Procédé selon la revendication 1 ou 2, la courbe caractéristique totale (13) de l'élément photovoltaïque (1) étant déterminée à l'étape e) par addition des photo-courants déterminés à partir de la courbe caractéristique sombre (3) de l'élément photovoltaïque (1) et à partir des courbes caractéristiques mesurées (7) des segments individuels (5).

4.  Procédé selon l'une des revendications précédentes, un segment (5) de l'élément photovoltaïque (1) dans la direction de déplacement (11) ne présentant au moins en grande partie aucun chevauchement et au moins en grande partie aucun espace avec un segment précédent (5) et/ou avec un segment suivant (5), et/ou l'élément photovoltaïque (1), de préférence une surface photo-active de l'élément photovoltaïque (1), étant entièrement capturé par les segments individuels (5).

5.  Procédé selon l'une des revendications précédentes, la courbe caractéristique sombre (3) de l'élément photovoltaïque (1) étant fournie, de préférence mesurée, à l'étape b) avant ou après l'étape d) du procédé et/ou les étapes c) et d) étant réalisées conjointement.

6.  Procédé selon l'une des revendications précédentes, la courbe caractéristique sombre (3) de l'élément photovoltaïque (1) à l'étape b) étant une courbe caractéristique sombre (3) dans l'obscurité totale ou dans une large mesure totale.

7.  Procédé selon l'une des revendications précédentes, en présence de lumière ambiante, au moins une autre courbe caractéristique (17) étant mesurée pour la tension déterminée appliquée à l'élément photovoltaïque (1) et pour la lumière ambiante, les segments individuels (5) et/ou l'élément photovoltaïque (1) n'étant pas éclairés par le dispositif d'éclairage (9), et la courbe caractéristique totale (13) de l'élément photovoltaïque (1) étant en outre déterminée à l'étape e) en fonction de l'au moins une autre courbe caractéristique (17) pour la lumière ambiante et/ou la courbe caractéristique totale (13) de l'élément photovoltaïque (1) étant déterminée à l'étape e) en outre par soustraction des photo-courants de la lumière ambiante déterminés à partir des autres caractéristiques mesurées (17) des segments individuels (5) pour la lumière ambiante.

8.  Procédé selon l'une des revendications précédentes, une longueur des segments (5) dans la direction de déplacement (11) étant de 10 cm à 10 m, de préférence de 10 cm à 2 m, et/ou l'élément photovoltaïque (1) étant divisé en segments individuels (5) en fonction d'une surface (19) éclairée au moyen du dispositif d'éclairage (9).

9.  Procédé selon l'une des revendications précédentes, le procédé étant réalisé selon un procédé rouleau à rouleau, et/ou l'élément photovoltaïque (1) étant un élément photovoltaïque flexible (1), une première extrémité et/ou une deuxième extrémité de l'élément photovoltaïque (1) se présentant de préférence de manière partiellement enroulée pendant le procédé.

Fig. 1

Fig. 2

EP 4 097 844 B1

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018079657 A1
- EP 1647827 A1
- DE 112011100041 T5
- WO 2004083958 A2
- WO 2011161108 A1
- WO 2006092134 A1
- WO 2014206860 A1